(19) Europäisches Patentamt
European Patent Office
Office européen des brevets

(11) Veröffentlichungsnummer : **0 024 338**
**B1**

(12) # EUROPÄISCHE PATENTSCHRIFT

(45) Veröffentlichungstag der Patentschrift : **28.04.82**

(51) Int. Cl.³ : **C 07 D401/12**, C 08 G 73/06

(21) Anmeldenummer : **80104717.6**

(22) Anmeldetag : **09.08.80**

(54) **Neue Triazinderivate, ihre Herstellung und ihre Verwendung als Stabilisatoren für synthetische Polymere.**

(30) Priorität : **16.08.79 DE 2933078**

(43) Veröffentlichungstag der Anmeldung : **04.03.81 (Patentblatt 81/09)**

(45) Bekanntmachung des Hinweises auf die Patenterteilung : **28.04.82 Patentblatt 82/17**

(84) Benannte Vertragsstaaten : **AT BE CH DE FR GB IT LI LU NL SE**

(56) Entgegenhaltungen :
**DE - A - 2 636 130**
**DE - A - 2 636 144**

(73) Patentinhaber : **HOECHST AKTIENGESELLSCHAFT**
**Postfach 80 03 20**
**D-6230 Frankfurt/Main 80 (DE)**

(72) Erfinder : **Wiezer, Hartmut, Dr.**
**Hans-Fischer-Strasse 6**
**D-8906 Gersthofen (DE)**
Erfinder : **Pfahler, Gerhard, Dr.**
**Karlsbader Strasse 27**
**D-8900 Augsburg (DE)**

**EP 0 024 338 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Neue Triazinderivate, ihre Herstellung und ihre Verwendung als Stabilisatoren für synthetische Polymere

Die Erfindung betrifft neue piperidingruppenhaltige Triazinverbindungen, ein Verfahren zu ihrer Herstellung sowie ihre Verwendung als Lichtschutzmittel für synthetische Polymere mit zusätzlicher, antioxidativer Wirkung.

Die neuen Stabilisatoren lassen sich durch die allgemeine Formel (I)

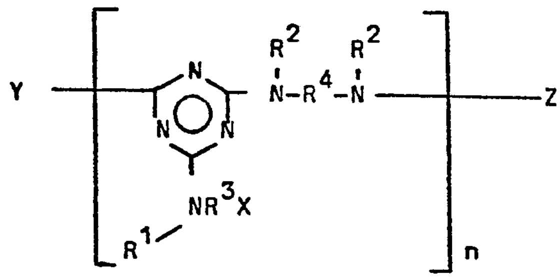

(I)

charakterisieren, in welcher

n eine Zahl von 1 bis 20, vorzugsweise von 3 bis 10 ist,

$R^1$ für Wasserstoff oder eine Gruppe der Formel (II)

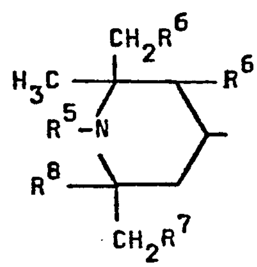

(II)

steht, in welcher

$R^5$ Wasserstoff oder $C_1$- bis $C_{18}$-Alkyl, vorzugsweise Wasserstoff oder $C_1$- bis $C_4$-Alkyl und insbesondere Wasserstoff ist, und

$R^6$ und $R^7$ entweder gleich sind und Wasserstoff oder eine $C_1$- bis $C_5$-Alkylgruppe, vorzugsweise Wasserstoff oder eine Methylgruppe und insbesondere Wasserstoff bedeuten, wobei dann

$R^8$ eine Methylgruppe ist, oder auch

$R^6$ Wasserstoff oder $C_1$- bis $C_5$-Alkyl ist und

$R^7$ und $R^8$ zusammen mit den Kohlenstoffatomen, an die sie gebunden sind, einen $C_5$- oder $C_6$-Cycloalkylring oder eine Gruppe der Formel

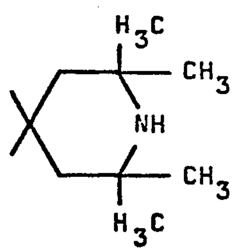

darstellen.

$R^2$ ist Wasserstoff, $C_1$- bis $C_{12}$-Alkyl oder eine Gruppe der Formel (II), vorzugsweise Wasserstoff oder eine Gruppe der Formel (II), es muß jedoch mindestens einer der Reste $R^1$ und $R^2$ eine Gruppe der Formel (II) sein.

X bedeutet eine Hydroxylgruppe oder eine Gruppe der Formeln —$OR^9$ oder —$N(R^{10})_2$, wobei

$R^9$ für eine $C_1$- bis $C_{18}$-Alkylgruppe und

$R^{10}$ für eine Methyl- oder Ethylgruppe steht.

$R^3$ ist eine gegebenenfalls durch eine Methylgruppe substituierte Alkylengruppe mit 2 bis 4 C-Atomen in der Kette, und

$R^4$ hat die Bedeutung einer Alkylengruppe mit 2 bis 18, vorzugsweise 2 bis 12 und insbesondere 2 bis 6 Kohlenstoffatomen, einer Dimethylencyclohexan, einer Phenylen- oder einer $C_7$- bis $C_{13}$-Aralkylengruppe.

Y ist bevorzugt Halogen oder eine Gruppe der Formel

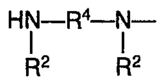 oder 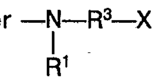 und

Z steht bevorzugt für Wasserstoff oder die Gruppe

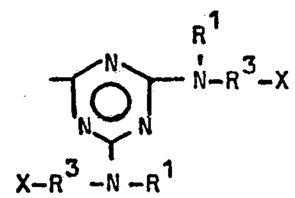

Beispiele für Reste in den Formeln (I) und (II) sind :

$R^1$ = Wasserstoff, 2,2,6,6-Tetramethyl-4-piperidyl, 2,3,6-Trimethyl-2,6-diethyl-4-piperidyl, 1,2,2,6,6-Pentamethyl-4-piperidyl ;

$R^2$ = Wasserstoff, Methyl, Ethyl, Propyl, Butyl, Pentyl, Hexyl, 2,2,6,6-Tetramethyl-4-piperidyl, 2,3,6-Trimethyl-2,6-di-ethyl-4-piperidyl, 1,2,2,6,6-Pentamethylpiperidyl ;

$R^3$ = Ethylen, Propylen, Butylen, 4-Methylbutylen ;

$R^4$ = Ethylen, Propylen, Methylethylen, Butylen, Pentylen, Hexylen, Decylen, Dodecylen, Phenylen, 4,4'-Diphenylenmethan ;

$R^5$ = Wasserstoff, Methyl, Butyl ;

$R^6$ = Wasserstoff, Methyl, Ethyl ;

$R^7$ = Wasserstoff, Methyl, Ethyl ;

$R^8$ = Methyl ;

$R^9$ = Methyl, Ethyl, Octyl, Tridecyl, Octadecyl.

Die neuen Triazinstabilisatoren werden, ausgehend von un- oder teilsubstituierten Cyanurhalogeniden, erhalten, wobei man in unterschiedlicher Weise vorgehen kann. Nach der Variante A setzt man ein Triazin der Formel (III)

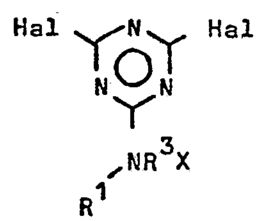 (III)

worin Hal = Halogen, bevorzugt Chlor, ist und $R^1$, $R^3$ sowie X die oben angegebenen Bedeutungen haben, mit der 0,8- bis 2,0, vorzugsweise der 1,0- bis 1,2fach molaren Menge, eines Diamins der Formel (IV)

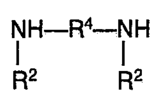 (IV)

in der $R^2$ und $R^4$ die oben angegebenen Bedeutungen haben, um.

Variante B ist ein sog. « Eintopfverfahren », bei dem man zunächst ein Cyanurhalogenid mit der 0,8- bis 1,3fach molaren, vorzugsweise der äquimolaren Menge einer Verbindung der Formel (V)

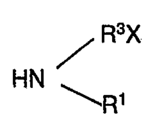 (V)

worin $R^1$, $R^3$ und X die oben angegebenen Bedeutungen haben, in Gegenwart äquivalenter Mengen, bezogen auf eingesetzte Verbindung (V), einer organischen oder anorganischen Base umsetzt, und

bringt das so erhaltene Produkt (III), ohne es zu isolieren wie unter A beschrieben, mit dem Diamin (IV) zur Reaktion.

Nach Variante C wird schließlich ein Cyanurhalogenid mit der 1,0- bis 1,2fach molaren Menge einer Verbindung der Formel (IV) in Gegenwart der äquivalenten Menge einer organischen oder anorganischen Base kondensiert, worauf man die restlichen Halogenatome der Cyanurverbindung durch Umsetzen mit der 1- bis 1,3-, vorzugsweise 1,05- bis 1,1fach valenten Menge, bezogen auf noch vorhandenes Halogen, einer Verbindung der Formel (V), ebenfalls unter Verwendung äquimolarer Mengen, bezogen auf Verbindung (V), einer organischen oder anorganischen Base substituiert. Auch hier ist das Arbeiten nach einem Eintopfverfahren praktizierbar.

Die Umsetzung werden in organischen Lösungsmitteln wie z.B. Petrolether, Aceton, Ether, Dioxan, Benzol, Toluol, Xylol, Cumol oder Mesithylen bei 0 bis 200 °C durchgeführt. Arbeitet man nach der Variante B, so wird die Umsetzung des Cyanurhalogenids mit einer Verbindung der Formel (V) bei 0 bis 50 °C und die anschließende Kondensation mit einer Verbindung der Formel (IV) bei Temperaturen von 50 bis 200, vorzugsweise 80 bis 150 °C vorgenommen.

Nach dem Verfahren gemäß Variante C wird die Umsetzung des Cyanurhalogenids mit der Diaminkomponente (IV) bei 20 bis 150, vorzugsweise 40 bis 80 °C und die weitere Reaktion mit der Komponente (V) bei 50 bis 200, vorzugsweise 80 bis 150 °C durchgeführt.

Bei der Herstellung der erfindungsgemäßen Verbindungen dienen äquivalente Mengen organischer oder anorganischer Basen als Halogenwasserstoffänger. Geeignete Basen sind z.B. Natriumhydroxid, Kaliumhydroxid, Natriumcarbonat, Kaliumcarbonat und Triethylamin.

Beispiele für Dihalogentriazin-Zwischenverbindungen der Formel (III) sind :

2,4-Dichlor-6-[N-(2,2,6,6-tetramethyl-4-piperidyl)-3-di-methyl-amino-propylamino]-1,3,5-triazin
2,4-Dichlor-6-[N-(2,2,6,6-tetramethyl-4-piperidyl)-3-diethyl-amino-propylamino]-1,3,5-triazin
2,4-Dichlor-6-[N-(2,2,6,6-tetramethyl-4-piperidyl)-2-dimethyl-amino-ethylamino]-1,3,5-triazin
2,4-Dichlor-6-[N-(2,2,6,6-tetramethyl-4-piperidyl)-2-diethyl-amino-ethylamino]-1,3,5-triazin
2,4-Dichlor-6-[N-(2,2,6,6-tetramethyl-4-piperidyl)-4-diethyl-amino-butylamino]-1,3,5-triazin
2,4-Dichlor-6-[N-(2,2,6,6-tetramethyl-4-piperidyl)-4-diethyl-amino-1-methylbutylamino]-1,3,5-triazin
2,4-Dichlor-6-[N-(2,2,6,6-tetramethyl-4-piperidyl)-3-hydroxy-propylamino]-1,3,5-triazin
2,4-Dichlor-6-[N-(2,2,6,6-tetramethyl-4-piperidyl)-2-methoxy-ethylamino]-1,3,5-triazin
2,4-Dichlor-6-[N-(2,2,6,6-tetramethyl-4-piperidyl)-2-ethoxy-ethylamino]-1,3,5-triazin
2,4-Dichlor-6-[N-(2,2,6,6-tetramethyl-4-piperidyl)-3-ethoxy-propylamino]-1,3,5-triazin
2,4-Dichlor-6-[N-(2,2,6,6-tetramethyl-4-piperidyl)-3-octoxypropylamino]-1,3,5-triazin
2,4-Dichlor-6-[N-(2,2,6,6-tetramethyl-4-piperidyl)-3-tridecyl-oxypropylamino]-1,3,5-triazin
2,4-Dichlor-6-[N-(2,2,6,6-tetramethyl-4-piperidyl)-3-octadecyl-oxypropylamino]-1,3,5-triazin
2,4-Dichlor-6-[N-(2,3,6-trimethyl-2,6-diethyl-4-piperidyl)-3-dimethyl-aminopropylamino]-1,3,5-triazin

Beispiele für Verbindungen der Formel (IV) sind :

Ethylendiamin, 1,3-Diaminopropan, 1,2-Diaminopropan, 1,4-Diaminobutan, 1,5-Diaminopentan, 1,6-Diaminohexan, 1,10-Diaminodecan, 1,12-Diaminododecan, p-Phenylendiamin, p-Xylylendiamin, 1,2-Bis-(2,2,6,6-tetramethyl-4-piperidyl)-ethan, 1,3-Bis-(2,2,6,6-tetramethyl-4-piperidyl)-ethan, 1,6-Bis-(2,2,6,6-tetramethyl-4-piperidyl)-hexan, 1,2-Bis-(2,3,6-trimethyl-2,6-diethyl-4-piperidyl)-ethan.

Beispiele für Verbindungen der Formel (V) sind :

N-(2,2,6,6-tetramethyl-4-piperidyl)-3-dimethylaminopropylamin
N-(2,2,6,6-tetramethyl-4-piperidyl)-3-diethylamino-propylamin
N-(2,2,6,6-tetramethyl-4-piperidyl)-2-dimethylamino-ethylamin
N-(2,2,6,6-tetramethyl-4-piperidyl)-2-diethylamino-ethylamin
N-(2,2,6,6-tetramethyl-4-piperidyl)-4-diethylaminobutylamin 2,2,6,6-Tetramethyl-4-piperidylaminopropanol-3
N-(2,2,6,6-tetramethyl-4-piperidyl)-4-diethylamino-1-methyl-butylamin
N-(2,2,6,6-tetramethyl-4-piperidyl)-2-methoxy-ethylamin
N-(2,2,6,6-tetramethyl-4-piperidyl)-2-ethoxy-ethylamin
N-(2,2,6,6-tetramethyl-4-piperidyl)-3-methoxypropylamin
N-(2,2,6,6-tetramethyl-4-piperidyl)-3-ethoxypropylamin
N-(2,2,6,6-tetramethyl-4-piperidyl)-3-octoxypropylamin
N-(2,2,6,6-tetramethyl-4-piperidyl)-3-tridecyloxypropylamin
N-(2,2,6,6-tetramethyl-4-piperidyl)-3-octadecyloxypropylamin

Daß man zur Herstellung der beanspruchten Verbindungen in der geschilderten Weise vorgehen könne, war nicht zu erwarten. Zwar ist die Umsetzung von Cyanursäurehalogeniden mit primären oder sekundären Mono- oder Polyaminen zur definierten Verbindungen oder polymeren Triazinen, die nach den Regeln der Synthese von Carbonsäureamiden aus Carbonsäurechloriden verläuff, seit geraumer Zeit

Stand der Technik [J. Amer. Chem. Soc. 73 (1951), Nr. 7, S. 2981 ff ; US-PS 25 44 071 ; CH-PS 342 784 ; CH-PS 342 785], es ist jedoch andererseits bekannt, daß Cyanursäurehalogenide mit Alkoholen glatt zu Cyanursäureestern reagieren, und es wäre daher naheliegend gewesen, daß die Cyanursäurehalogenide beim Einsatz von Aminoalkoholen [Verbindung (V) mit X = OH] entsprechend der Reaktionsgleichung (a)

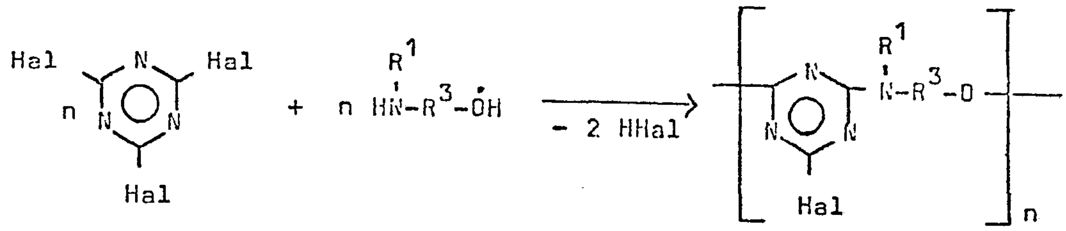


(a)

reagieren würden. Da außerdem bei Produkten mit X = —OR⁹ eine Etherspaltung aufgrund nicht auszuschließender Mengen Halogenwasserstoff in Betracht gezogen werden mußte, hätte auch in diesem Falle nach vollzogener Etherspaltung die Reaktion nach a ablaufen können.

Überraschenderweise läuft die Reaktion jedoch nicht wie erwartet ab, sondern führt zu Verbindungen des Typs (IIIa), welche Monomere für die erfindungsgemäße Kondensation mit Diaminen darstellen.

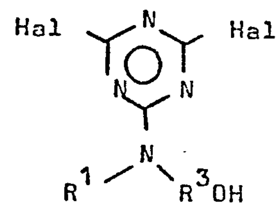

(IIIa)

Auch nach den Ausführungen der DE-OS 26 36 144, die auf dem Stabilisatorgebiet zum nächsten Stand der Technik gehört und Triazinstabilisatoren beschreibt, hätte man den skizierten Reaktionsverlauf (a) erwarten müssen.

Es ist ferner bekannt, daß Carbonsäurechloride bei Temperaturen von z.B. 190 °C mit tert. Aminen unter Abspaltung von Alkylhalogenid (besonders Methylchlorid) zu Carbonsäureamiden kondensieren (D. Hesse, Ber. Dt. Chem. Ges. *18,* S. 685) und somit auch ein Reaktionsverlauf entsprechend der nachstehenden Reaktionsgleichung (b)

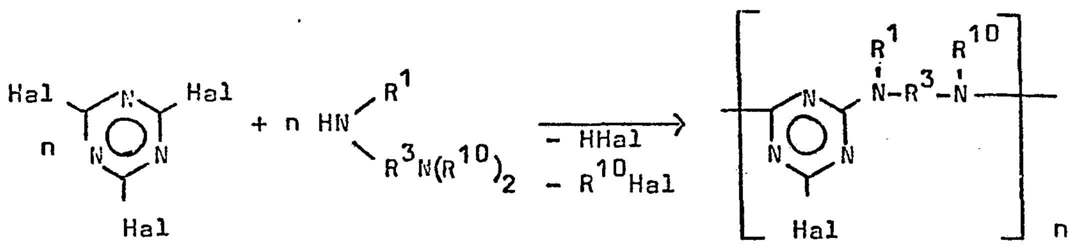


(b)

nicht auszuschließen war.

Daß man nur Produkte des Typs (IIIb)

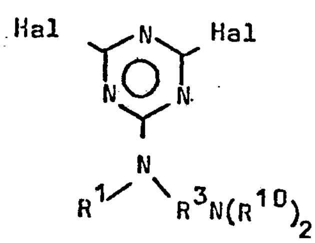

(IIIb)

erhält, muß daher ebenfalls als nicht vorhersehbar bezeichnet werden.

Da die erfindungsgemäßen Triazinverbindungen noch Endgruppen enthalten, die auch Halogen sein können, hätte besonders bei den hohen, für die Kunststoffverarbeitung nötigen Temperaturen von bis zu 300 °C die Entwicklung von Alkylhalogeniden beobachtet werden müssen. Diese Vermutung hat sich überraschenderweise nicht bestätigt.

Die neuen Triazinstabilisatoren lassen sich problemlos in die zu stabilisierenden Polymeren einarbeiten und sind hervorragend zum Stabilisieren derselben geeignet. Wie bereits erwähnt, sind in der DE-OS 26 36 144 ähnliche Triazinverbindungen beschrieben, welche jedoch noch diverse Mängel zeigen.

So sind z.B. eine geringe Flüchtigkeit der Stabilisatoren, gute Verträglichkeit mit den zu stabilisierenden Polymeren, Migrationsfestigkeit gegenüber Wasser, welche bei der Freibewitterung wichtig ist, und auch gegenüber Kohlenwasserstoffen sowie die Thermostabilität der Additive neben ihrer Wirksamkeit von essentieller Bedeutung.

Es ist aber noch kein Stabilisator bekannt, der in allen diesen Punkten voll befriedigen könnte. Alle üblichen Stabilisatoren, auch die der DE-OS 26 36 144, sind bezüglich ihrer Stabilisatoreignung nur als Kompromißlösung anzusehen.

Aus diesen Gründen ist es auch verständlich, daß noch keines dieser Produkte auf dem Markt Bedeutung erlangt hat. In größerem Maß wird bisher nur das Bis-(2,2,6,6-tetramethyl-4-piperidyl)-sebacat als Lichtschutzmittel verwendet (DE-PS 19 29 928 und DE-OS 22 04 659).

Die Triazinstabilisatoren der Erfindung sind weitgehend frei von den oben aufgezeigten Nachteilen und zeichnen sich obendrein durch eine außerordentlich gute Stabilisatorwirksamkeit für organische Polymere aus.

Die Verbindungen der Formel (I) werden somit als Stabilisatoren für Kunststoffe gegen deren Schädigung durch Einwirkung von Sauerstoff, Wärme und Licht verwendet. Beispiele für solche Kunststoffe sind im einzelnen :

Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol-Butadien-Copolymere, sowie Terpolymere von Ethylen und Propylen mit einem Dien, wie z.B. Hexadien, Dicyclopentadien oder Ethylidennorbornen ; Mischungen der oben genannten Homopolymeren, wie beispielsweise Gemische von Polypropylen und Polyethylen, Polypropylen und Polybuten-1, Polypropylen und Polyisobutylen oder von Butadien-Acrylnitril-Copolymerisat mit einem Styrol-Butadien-Copolymerisat.

Halogenhaltige Vinylpolymere, wie Polyvinylchlorid, Polyvinylidenchlorid, Polyvinylfluorid, Polychloropren und Chlorkautschuke, sowie Copolymere von Vinylchlorid und Vinylidenchlorid untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril, sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinylacetat, - stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoxymethylen und Polyoxyethylen, sowie solche Polyoxymethylene, die als Comonomeres Ethylenoxid enthalten.

Polyurethane und Polyharnstoffe

Polycarbonate

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxycarbonsäuren oder den entsprechenden Lactonen ableiten, wie Polyethylenglykolterephthalat, Polybutylenterephthalat, Poly-1,4-dimethylol-cyclohexanterephthalat, sowie deren Ausgangsmaterialien, wie niedere Terephthalsäurealkylester.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Von besonderer Bedeutung ist die Stabilisierung von Polyolefinen, Styrolpolymerisaten, Polyamiden, Poly(meth-) acrylaten und von Polyurethanen, für die sich die Verbindungen bevorzugt eignen. Beispiele

hierfür sind Polyethylen hoher und niedriger Dichte, Polypropylen, Ethylen-Propylen-Copolymerisate, Polystyrol, Styrol-Butadien-Acrylnitril-Terpolymerisate, Mischungen von Polyolefinen oder von Styrolpolymerisaten, Polyurethane auf Polyether- oder Polyesterbasis in Form von Lacken, Fäden, Folien, Platten, Filmen, Elastomeren oder Schaumstoffen.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise 0,05 bis 2,5 und insbesondere 0,1 bis 1,0 Gew.-%, berechnet auf das zu stabilisierende Material. Die neuen Verbindungen können auch in Form eines Masterbatches, der diese Verbindungen beispielsweise in einer Konzentration von 2,5 bis 50, vorzugsweise 5,0 bis 20 Gew.-% enthält, den zu stabilisierenden Kunststoffen zugesetzt werden.

Die durch den Zusatz der erfindungsgemäßen Substanzen der Formel (I) stabilisierten Kunststoffe können gegebenenfalls noch andere bekannte und übliche Zusätze, wie beispielsweise Antioxidantien auf Phenol- und Sulfidbasis, UV-Absorber und Lichtschutzmittel, Phosphitstabilisatoren, Metallverbindungen, Epoxystabilisatoren und mehrwertige Alkohole enthalten.

Beispiele für Antioxidantien sind solche vom Typ der sterisch gehinderten Phenole wie 4,4'-Butyliden-bis-(2,6-di-tert.-butylphenol), 4,4'-Thio-bis-(2-tert.-butyl-5-methylphenol), phenolische Triazinverbindungen, Thiodipropionsäureester von Fettalkoholen, Dioctadecylsulfid und -disulfid.

Zu den UV-Absorbern und Lichtschutzmitteln gehören z.B. 2-(2'-Hydroxyphenyl)-benztriazole wie 2-(2'-Hydroxy-5'-methyl-phenyl)-benztriazol, 2-Hydroxybenzophenone wie 2-Hydroxy-4-octoxy-benzophenon, Stabilisatoren aus der Gruppe der Salizylate wie Octylphenylsalizylat, Nickelchelate, Oxalsäurediamide und sterisch gehinderte Piperidinverbindungen.

Als Phosphite sind Trisnonylphenylphosphit, Trislaurylphosphit oder auch Ester des Pentaerythritphosphits zu nennen.

Unter als Stabilisatoren bekannten Metallverbindungen werden in diesem Zusammenhang verstanden : Calcium-, Barium-, Strontium-, Zink-, Cadmium-, Magnesium-, Aluminium- und Bleiseifen aliphatischer Carbonsäuren oder Oxycarbonsäuren mit etwa 12 bis 32 C-Atomen, Salze der genannten Metalle mit aromatischen Carbonsäuren wie Benzoate oder Salizylate sowie (Alkyl)-Phenolate dieser Metalle, ferner Organozinnverbindungen, wie z.B. Dialkylzinnthioglykolate und -carboxylate.

Bekannte Epoxystabilisatoren sind z.B. epoxidierte höhere Fettsäuren wie epoxidiertes Sojabohnenöl, Tallöl, Leinöl oder epoxidiertes Bytyloleat sowie Epoxide langkettiger Olefine.

Mehrwertige Alkohole können beispielsweise Pentaerythrit, Trimethylolpropan, Sorbit oder Mannit sein, d. h. bevorzugt Alkohole mit 5 oder 6 C-Atomen und 2 bis 6 OH-Gruppen.

Eine wirksame zusätzliche Stabilisation für Poly-α-Olefine, wie z.B. Hoch-, Mittel- und Niederdruckpolymerisate von $C_2$- bis $C_4$-α-Olefinen, insbesondere Polyethylen und Polypropylen oder von Copolymerisaten derartiger α-Olefine besteht, bezogen auf 100 Gewichtsteile Polymer, beispielsweise aus 0,01 bis 5 Gewichtsteilen einer der erfindungsgemäß zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z.B. Calciumstearat oder Zinkstearat sowie gegebenenfalls 0,1 bis 5 Gewichtsteilen eines Phosphits und gegebenenfalls 0,01 bis 5 Gewichtsteilen eines bekannten UV-Stabilisators aus der Gruppe des Alkoxyhydroxybenzophenone, 4-Hydroxyphenylbenzotriazole, Benzylidenmalonsäuremononitrilester oder der sog. Quencher, wie z.B. Nickelchelate.

Die erfindungsgemäß stabilisierten Kunststoffe können in verschiedenster Form angewendet werden, z.B. als Folien, Fasern, Bändchen, Profile oder als Bindemittel für Lacke, Klebemittel oder Kitte.

Die folgenden Beispiele dienen der Erläuterung der Erfindungsgegenstandes.

## Beispiel 1

26,9 g (0,1 Mol) 1-(2,2,6,6-Tetramethyl-4-piperidylamino)-3-diethylaminopropan (monofunktionelle Komponente) und 10 g pulverisiertes Natriumhydroxid werden in 50 ml abs. Toluol vorgelegt. Innerhalb von 20 min tropft man eine Lösung aus 14,7 g (0,08 Mol) Cyanurchlorid und 50 ml abs. Toluol bei 20 °C zu. Es wird 7 h bei 20 °C nachgerührt und anschließend eine Lösung aus 4,8 g (0,08 Mol) Ethylendiamin (bifunktionelle Komponente) und 50 ml abs. Toluol langsam zugegeben. Das resultierende Reaktionsgemisch wird 7 h bei 70 bis 75 °C gerührt, der Niederschlag abfiltriert und das Filtrat einrotiert. Das zurückbleibende Harz wird mit 100 ml dest. Wasser im Labormixer verrührt, abgenutscht und getrocknet. Das Harz hat eine reduzierte spezifische Viskosität von 0,07, gemessen in einer 1 Gew.-%igen Lösung in Chloroform bei 25 °C. Molgewicht : 1 100.

## Beispiele 2 bis 9

Es wurde analog Beispiel 1 mit anderen bifunktionellen Komponenten gearbeitet.

| Beispiel | Bifunktionelle Komponente (Menge) | Monofunktionelle Komponente (Menge) | RSV-Wert [1)] |
|---|---|---|---|
| 2 | Hexamethylendiamin (9,3 g ≙ 0,08 Mol) | analog Beispiel 1 | 0,09 |
| 3 | 1,2-Bis-(2,2,6,6-tetramethyl-4-piperidyl-amino)-ethan (27,0 g ≙ 0,08 Mol) | dto. | 0,06 |
| 4 | 1,6-Bis-(2,2,6,6-tetramethyl-4-piperidyl-amino)-hexan (31,5 g ≙ 0,08 Mol) | dto. | 0,06 |
| 5 + | Ethylendiamin (4,8 g ≙ 0,08 Mol) | 1-(2,2,6,6-Tetramethyl-4-piperidylamino)-3-dimethyl-aminopropan(24,1 g ≙ 0,1 Mol) | 0,07 |
| 6 + | Hexamethylendiamin (9,3 g ≙ 0,08 Mol) | dto. | 0,08 |
| 7 + | 1,6-Bis-(2,2,6,6-tetramethyl-4-piperidyl-amino)-hexan (31,5 g ≙ 0,08 Mol) | dto. | 0,09 |
| 8 + | 1,2-Bis-(2,2,6,6-tetramethyl-4-piperidyl-amino)-ethan (27,0 g ≙ 0,08 Mol) | dto. | 0,08 |
| 9 ++ | 4,4'-Diaminodiphenylmethan(15,8 g ≙ 0,08 Mol) | dto. | 0,15 |

\+ zusätzlich 7 h bei 95 bis 105 °C

++ 5 h bei 105 °C gerührt

1) 1 Gew.-%ige Lösung in $CHCl_3$, gemessen bei 25 °C

Beispiel 10

29,7 g (0,1 Mol) 1-(2,2,6,6-Tetramethyl-4-piperidylamino)-1-methyl-4-diethylaminobutan (monofunktionelle Komponente) und 4 g (0,1 Mol) pulverisiertes Natriumhydroxid werden in 100 ml abs. Xylol vorgelegt. Bei 20 °C tropft man eine Lösung aus 18,5 g (0,1 Mol) Cyanurchlorid und 50 ml abs. Xylol zu. Man rührt 10 h bei 20 °C und versetzt anschließend mit 8,4 g (0,21 Mol) Natriumhydroxid und einer Lösung aus 12,2 g (0,205 Mol) Hexamethylendiamin und 50 ml abs. Xylol. Es wird 16 h unter Rückfluß gerührt, der Niederschlag abfiltriert und das Filtrat einrotiert. Danach wird wie bei Beispiel 1 erläutert gereinigt. Harz mit RSV-Wert von 0,07

Beispiele 11 bis 16

Es wird analog Beispiel 10 gearbeitet.

(Siehe die Tabelle Seite 10)

| Beispiel | Bifunktionelle Komponente (Menge) | Monofunktionelle Komponente (Menge) | RSV-Wert [1)] |
|---|---|---|---|
| 11 | 1.2-Bis-(2,2,6,6-tetramethyl-4-piperidylamino)ethan (38,1 g ≙ 0,105 Mol) | analog Beispiel 10 | 0,04 |
| 12 | 1,6-Bis-(2,2,6,6-tetramethyl-4-piperidylamino)-hexan (41,4 g ≙ 0,105 Mol) | dto. | 0,04 |
| 13 | Ethylendiamin (6,3 g ≙ 0,105 Mol) | dto. | 0,03 |
| 14 + | 1.3-Bis-(2,2,6,6-tetramethyl-4-piperidylaminomethyl)-cyclohexan (21,3 g ≙ 0,105 Mol) | analog Beispiel 1 | 0,04 |
| 15 + | 1,3-Bis-aminomethylcyclohexan (21,3 g ≙ 0,105 Mol) | dto. | 0,05 |
| 16 + | 4,4'-Bis-aminocyclohexylmethan (31,5 g ≙ 0.15 Mol) | dto. | 0,06 |

\+ abs. Toluol als Lösungsmittel - 7 h unter Rückfluß gerührt

1) 1 Gew.-%ige Lösung in $CHCl_3$, gemessen bei 25 °C

Beispiel 17

26,9 g (0,1 Mol) 1-(2,2,6,6-Tetramethyl-4-piperidylamino)-3-diethylaminopropan und 4 g (0,1 Mol) NaOH werden in 100 ml Xylol vorgelegt. Bei 20 °C wird eine Lösung aus 18,5 g (0,1 Mol) Cyanurchlorid in 100 ml Xylol zugetropft. Das Reaktionsgemisch wird 7 h nachgerührt. Dann werden weitere 8,4 g (0,21 Mol) NaOH zugegeben, eine Lösung aus 6,3 g (0,105 Mol) Ethylendiamin zugetropft und das resultierende Reaktionsgemisch 16 h unter Rühren am Rückfluß gekocht. Nach dem Erkalten wird das NaCl abgetrennt und die Xylollösung einrotiert. Es bleibt ein helles Harz mit einer reduzierten spezifischen Viskosität von 0,05 (gemessen in 1 %iger Lösung in Chloroform bei 25 °C).

Beispiele 18 bis 37

Es wurde analog Beispiel 17 gearbeitet.

(Siehe die Tabelle Seiten 12 und 13)

| Beispiel | Bifunktionelle Komponente (Menge) | Monofunktionelle Komponente (Menge) | RSV-Wert [1] |
|---|---|---|---|
| 18 | 1,3-Diaminopropan (7,8 g ≙ 0,105 Mol) | analog Beispiel 10 | 0,06 |
| 19 | 1,6-Diaminohexan (12,2 g ≙ 0,105 Mol) | dto. | 0,09 |
| 20 | 1,2-Bis-(2,2,6,6-Tetramethyl-4-piperidylamino)-ethan (35,5 g ≙ 0,105 Mol) | dto. | 0,06 |
| 21 | 1,6-Bis-(2,2,6,6-Tetramethyl-4-piperidylamino)-hexan (41,4 g ≙ 0,105 Mol) | dto. | 0,13 |
| 22 + | 1,2-Diaminoethan (6,3 g ≙ 0,105 Mol) | 1-(2,2,6,6-Tetramethyl-4-piperidylamino)-2-ethoxy-propan (24,2 g ≙ 0,1 Mol) | 0,06 |
| 23 + | 1,6-Diaminohexan (12,2 g ≙ 0,105 Mol) | dto. | 0,13 |
| 24 | dto. | 1-(2,2,6,6-Tetramethyl-4-piperidylamino)-propanol-3 (21,4 g ≙ 0,1 Mol) | 0,09 |
| 25 + | 1,2-Diaminoethan (6,3 g ≙ 0,105 Mol) | 1-(2,2,6,6-Tetramethyl-4-piperidylamino)-3-(2-ethylhexoxy)-propan (32.6 g ≙ 0,1 Mol) | 0,05 |
| 26 + | 1,6-Diaminohexan (12,2 g ≙ 0,105 Mol) | dto. | 0,11 |
| 27 + | 1,2-Diaminoethan (6,3 g ≙ 0,105 Mol) | 1-(2,2,6,6-Tetramethyl-4-piperidylamino)-2-methoxypropan (22,8 g ≙ 0.1 Mol) | 0,21 |

| Beispiel | Bifunktionelle Komponente (Menge) | Monofunktionelle Komponente (Menge) | RSV-Wert 1) |
|---|---|---|---|
| 28 + | 1,6-Diaminohexan (12,2 g ≙ 0,105 Mol) | 1-(2,2,6,6-Tetramethyl-4-piperidylamino)-3-methoxypropan (22,8 g ≙ 0,1 Mol) | 0,11 |
| 29 + | 1,6-Bis-(2,2,6,6-Tetramethyl-4-piperidylamino)-hexan (41,4 g ≙ 0,105 Mol) | 1-Amino-3-stearyloxypropan (32,7 g ≙ 0,1 Mol) | 0,07 |
| 30 | 1,2-Diaminoethan (6,3 g ≙ 0,105 Mol) | 1-(2,2,6,6-Tetramethyl-4-piperidylamino)-2-diethylamino-ethan (25,5 g ≙ 0,1 Mol) | 0,10 |
| 31 | 1,3-Diaminopropan (7,8 g ≙ 0,105 Mol) | dto. | 0,10 |
| 32 | 1,6-Diaminohexan (12,2 g ≙ 0,105 Mol) | dto. | unlöslich |
| 33 | 1,2-Bis-(2,2,6,6-Tetramethyl-4-piperidylamino)-hexan (35,5 g ≙ 0,105 Mol) | dto. | 0,08 |
| 34 | 1,6-Bis-(2,2,6,6-Tetramethyl-4-piperidylamino)-hexan (41,5 g ≙ 0,105 Mol) | dto. | 0,13 |
| 35 | dto. | 1-(2,2,6,6-Tetramethyl-4-piperidylamino)-2-dimethylamino-ethan (22,7 g ≙ 0,1 Mol) | 0,14 |
| 36 | 1,3-Diaminopropan (7,8 g ≙ 0,105 Mol) | 1-(2,2,6,6-Tetramethyl-4-piperidylamino)-4-diethylamino-hexan ( 28,3 g ≙ 0,1 Mol) | unlöslich |
| 37 | 1,6-Bis-(2,2,6,6-Tetramethyl-4-piperidylamino)-hexan (41,4 g ≙ 0,105 Mol) | dto. | 0,08 |

+ Toluol als Lösungsmittel  1) 1 %ige Lösung in $CHCl_3$ bei 25 °C

Beispiel 38

In 100 ml Xylol werden 18,5 g (0,1 Mol) Cyanurchlorid vorgelegt. Bei 20 °C wurde sodann eine Lösung aus 39,4 g (0,1 Mol) 1,6-Bis-(2,2,6,6-tetramethyl-4-piperidylamino)-hexan und 100 ml Xylol zugetropft. Anschließend wurden 8 g (0,2 Mol) NaOH zugegeben, worauf man 14 h bei 25 °C rührte.

Nun gab man weitere 4 g (0,1 Mol) NaOH zu und tropfte eine Lösung aus 24,1 g (0,1 Mol) 1-(2,2,6,6-Tetramethyl-4-piperidylamino)-3-dimethylaminopropan und 50 ml Xylol ein, worauf 9 h am Rückfluß gekocht wurde.

Aufarbeitung analog Beispiel 1.
RSV-Wert des Triazinharzes 0,18.

Beispiel 39

In einer Rührapparatur wurden 18,4 g (0,1 Mol) Cyanurchlorid in 100 ml Aceton vorgelegt und eine Lösung aus 24,1 g (0,1 Mol) 1-(2,2,6,6-Tetramethyl-4-piperidylamino)-3-dimethylamino-propan und 80 ml Aceton bei 0 °C zugetropft. Nach beendetem Zutropfen wurden 4 g NaOH, gelöst in 40 ml Wasser, zugegeben und 5 h gerührt. Es wurde abgenutscht, mit Wasser gewaschen und getrocknet. Das erhaltene 2,4-Dichlor-6-N-(2,2,6,6-tetramethyl-4-piperidyl)-3-dimethylamino-propylamino-1,3,5-triazin schmilzt bei > 250 °C.

Zur Weiterverarbeitung wurden 23 g (0,05 Mol) mit 3 g (0,05 Mol) 1,2-Diaminoethan und 4 g (0,1 Mol) NaOH in 100 ml Toluol unter Rühren 10 h am Rückfluß gekocht. Anschließend wurde analog Beispiel 17 aufgearbeitet, wobei man ein helles Harz erhielt. RSV-Wert 0,02.

Beispiel 40

Dieses Beispiel zeigt die Flüchtigkeit der erfindungsgemäßen Triazinstabilisatoren im Vergleich zu Produkt 6 nach DE-OS 26 36 144.

Die Flüchtigkeiten wurden in einer Apparatur zur thermogravimetrischen Analyse bestimmt. Gleiche Mengen (500 mg) der erfindungsgemäßen Copolymerisate und der Vergleichssubstanzen wurden dazu in Stickstoffatmosphäre mit einer Aufheizgeschwindigkeit von 2 K/min bis auf 300 °C aufgeheizt und der Substanzverlust in $mg/cm^2$ gemassen. Die Ergebnisse zeigt nachfolgende Tabelle :

| Polymerisat gemäß Bsp. | Gewichtsverlust in $mg/cm^2$ beim Erreichen von ... °C | | | |
|---|---|---|---|---|
| | 220 | 260 | 300 | 10 min bei 300 |
| 2 | 0,03 | 1,58 | 5,37 | 9,48 |
| 5 | 0,02 | 1,42 | 4,90 | 7,74 |
| 3 | 0,16 | 2,37 | 6,84 | 11,69 |
| 6 | 0,01 | 1,11 | 3,79 | 5,37 |
| 8 | 0,02 | 0,63 | 3,63 | 5,69 |
| Vergleich + | 0,47 | 3,48 | 10,59 | 17,38 |

+ Stabilisator nach Beispiel 6 der DE-OS 26 36 144

Beispiel 41

100 Gewichtsteile Polypropylen mit einem Schmelzindex $i_5$ von ca.
6 g/10 min (bestimmt nach ASTM D 1238-62 T) und einer Dichte von 0,90 wurden mit
0,1 Gewichtsteilen Pentaerythrityl-tetrakis-3-(3,5-di-tert.-butyl-4-hydroxyphenyl)-propionat,
0,2 Gewichtsteilen Calciumstearat und
0,3 Gewichtsteilen des zu prüfenden erfindungsgemäßen Stabilisators vermischt.

Um eine möglichst gleichmäßige Verteilung auf dem Polymerkorn zu erreichen, wurden die Stabilisatoren in einem Lösemittel gelöst, und die Lösung wurde unter Rühren in das Polypropylenpulver eingetropft, wobei durch gleichzeitige Bestrahlung mit einer IR-Lampe der größte Teil des Lösemittels wieder abdampfte. Nach ca. 20 min wurde das Calciumstearat hinzugegeben und noch weitere 10 min gemischt. Lösemittelreste wurden durch Trocknen bei 50 °C/120 min in Trockenschrank entfernt.

Das Polypropylen wurde auf einer Windsor-Spritzgußmaschine der Type SP 50 bei 240 °C zu 60 × 60 × 1 mm-Platten verspritzt. Aus diesen Platten wurden Prüfkörper nach DIN 53 455 Form 3,

verkleinert im Maßstab 1 : 3, ausgestanzt. Die als Vergleichsmuster benötigten Prüfkörper wurden analog, jedoch unter Fortlassen des zu testenden Stabilisators bzw. unter Zusatz der Vergleichsstabilisatoren, hergestellt.

Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsintensität wurde durch UV-Filter (Spezialfilterglas d = 1,7 mm) moduliert. Die Lichtbeständigkeit wurde nach DIN 53 387 (17 min befeuchten, 3 min beregnen, Schwarztafeltemperatur 45 °C, Luftfeuchtigkeit 70 bis 75 %) geprüft. Nach einer bestimmten Belichtungszeit in Stunden wurde die Reißdehnung auf einer Zugprüfmaschine der Firma Instron bei einer Abzugsgeschwindigkeit von 5 cm/min ermittel.

| Stabilisator nach Beispiel | Belichtungszeit in Stunden | ermittelte Reißdehnung in % vom Ausgangswert |
|---|---|---|
| 2 | 1 400 | > 50 |
| 3 | 1 400 | > 50 |
| 5 | 1 400 | > 50 |
| 6 | 1 400 | > 50 |
| 8 | 1 400 | > 50 |
| Polypropylen | 260 | 1 |
| Vergleich (ohne Stabilisator) | 320 | 1 |
| Vergleich +) | 1 400 | < 50 |

+) Stabilisator gemäß Beispiel 6 der DE-OS 26 36 144

Beispiel 42

Zu Polypropylen (Hostalen PPU VP 1770 F) vom Schmelzindex MFI 190/51,9 g/10 min s. DIN 53 735 werden 0,1 bis 0,25 Gewichtsteile der *) angegebenen Stabilisatoren über einen Laborschnellmischer singemischt. Das so stabilisierte Materiel wurde in einem Laborextruder unter den üblichen Verarbeitungsbedingungen aufgeschmolzen und über eine Spinnpumpe mit Mehrfachspinnkopf zu Monofilamenten (87 dtex) verarbeitet, welche anschließend im Verhältnis 1 : 2,5 nachverstreckt wurden. Je 24 dieser Filamente wurden zu Garnen texturiert und diese zu Prüfgeweben verarbeitet. Die Prüflinge wurden in einem Fadeometer der Lichtechtheitsprüfung interzogen und nach der angegebenen Belichtungszeit dem Fingernageltest (leichtes Darüberreiben über das Gewebe mit dem Daumennagel) unterzogen.

Nach 160 Stunden Belichtungszeit zeigten die mit den erfindungsgemäßen Verbindungen stabilisierten Prüfgewebe nach keine Schädigung.

*) in Beispiel 41.

**Ansprüche** (für die Vertragsstaaten : BE, CH, DE, FR, GB, IT, LI, LU, NL, SE)

1. Triazinverbindungen der Formel (I)

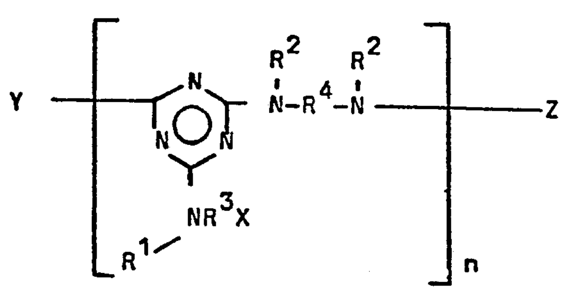

(I)

in welcher

n für eine Zahl von 1 bis 20 steht,

$R^1$ Wasserstoff oder eine Gruppe der Formel (II)

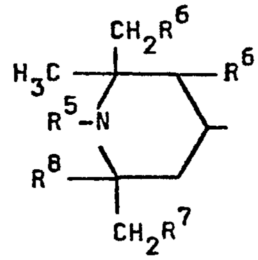

(II)

ist, in welcher

$R^5$ Wasserstoff oder $C_1$- bis $C_{18}$-Alkyl ist,

$R^6$ und $R^7$ entweder gleich sind und Wasserstoff oder eine $C_1$- bis $C_5$-Alkylgruppe bedeuten, wobei dann

$R^8$ eine Methylgruppe ist, oder

$R^6$ Wasserstoff oder $C_1$- bis $C_5$-Alkyl ist und

$R^7$ und $R^8$ zusammen mit den Kohlenstoffatomen, an die sie gebunden sind, einen $C_5$- oder $C_6$-Cycloalkylring oder eine Gruppe der Formel

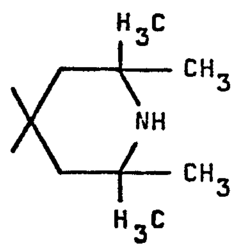

darstellen,

$R^2$ Wasserstoff, $C_1$- bis $C_{12}$-Alkyl oder eine Gruppe der Formel (II) bedeudet, wobei von den Resten $R^1$ und $R^2$ jedoch mindestens einer eine Gruppe der Formel (II) sein muß,

X eine Hydroxylgruppe oder eine Gruppe der Formel $—OR^9$ oder $—N(R^{10})_2$ ist, wobei

$R^9$ für eine $C_1$- bis $C_{18}$-Alkylgruppe und

$R^{10}$ für eine Methyl- oder Ethylgruppe steht,

$R^3$ eine Alkylengruppe mit 2 bis 4 C-Atomen in der Kette und

$R^4$ die Bedeutung einer Alkylengruppe mit 2 bis 18 Kohlenstoffatomen, einer Dimethylencyclohexan-, einer Phenylen- oder einer $C_7$- bis $C_{13}$-Aralkylengruppe hat, während

Y für Halogen oder eine Gruppe der Formel

$$\begin{array}{c} HNR^4N— \\ | \quad | \\ R^2 \quad R^2 \end{array} \quad \text{oder} \quad \begin{array}{c} —NR^3X \\ | \\ R^1 \end{array} \quad \text{und}$$

Z für Wasserstoff oder die Gruppe

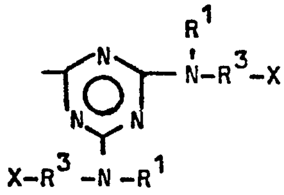

steht.

2. Verfahren zur Herstellung der Verbindungen nach Anspruch 1, dadurch gekennzeichnet, daß man entweder A) eine Verbindung der Formel (III)

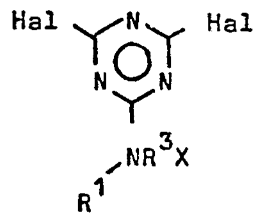

(III)

worin Hal = Halogen und $R^1$, $R^3$ sowie X die in Anspruch 1 angegebenen Bedeutungen haben, in einem inerten organischen Lösungsmittel bei einer Reaktionstemperatur von 50 bis 200 °C mit der 0,8 bis 2,0fach molaren Menge einer Verbindung der Forlmel (IV)

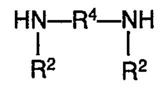

(IV)

in Gegenwart einer, bezogen auf Verbindung (IV), äquivalenten Menge einer Base umsetz, oder B) zunächst die Verbindung (III) durch Umsetzen von Cyanurhalogenid mit der 0,8 bis 1,3fach molaren Menge einer Verbindung der Formel (V)

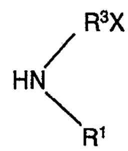

(V)

in einem inerten organischen Lösungsmittel unter Verwendung der, bezogen auf Verbindung (V), äquivalenten Menge Base als Katalysator sich bilden läßt und sodann die Verbindung (IV) zugibt, oder C) ein Cyanurhalogenid mit der 1,0 bis 1,2fach molaren Menge einer Verbindung der Formel (IV) zur Verbindung (VI)

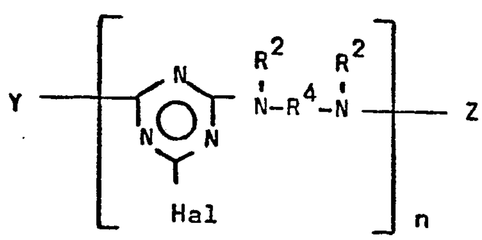

(VI)

umsetzt und deren Halogenatome mit der äquimolaren Menge einer Verbindung der Formel (V) abreagieren läßt.

3. Verwendung der Verbindungen nach Anspruch 1 zum Stabilisieren von synthetischen Polymeren.

4. Verwendung nach Anspruch 3, dadurch gekennzeichnet, daß das Polymere ein Polyolefin ist.

5. Verwendung nach Anspruch 3, dadurch gekennzeichnet, daß das Polymere ein halogenhaltiges Polymeres ist.

6. Verwendung nach Anspruch 3, dadurch gekennzeichnet, daß das Polymere ein Polyacrylat oder Polymethacrylat ist.

7. Verwendung nach Anspruch 3, dadurch gekennzeichnet, daß das Polymere ein Homo- oder Copolymerisat des Styrols ist.

8. Verfahren zum Stabilisieren von synthetischen Polymeren gegen den schädigenden Einfluß von Licht, dadurch gekennzeichnet, daß man dem Polymeren, erforderlichenfalls zusätzlich zu allgemeinüblichen stabilisierend wirkenden Stoffen, 0,01 bis 5 Gewichtsteile, bezogen auf Polymeres, eines Stabilisators nach Anspruch 1 zusetzt.

9. Gegen UV-Zersetzung stabilisierte, synthetische Polymere, dadurch gekennzeichnet, daß 0,01 bis 5 Gewichtsteile, eines Stabilisators nach Anspruch 1 enthalten sind, jeweils bezogen auf die Polymere.

**Ansprüche** (für den Vertragsstaat AT)

1. Verfahren zur Herstellung von Triazinverbindungen der Formel I

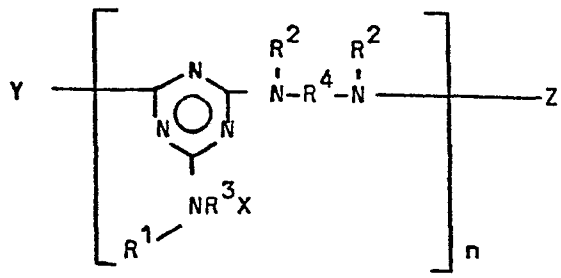 (I)

in welcher

n für eine Zahl von 1 bis 20 steht,

$R^1$ Wasserstoff oder eine Gruppe der Formel (II)

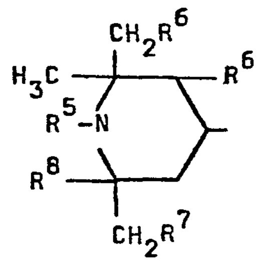 (II)

ist, in welcher

$R^5$ Wasserstoff oder $C_1$- bis $C_{18}$-Alkyl ist,

$R^6$ und $R^7$ entweder gleich sind und Wasserstoff oder eine $C_1$- bis $C_5$-Alkylgruppe bedeuten, wobei dann

$R^8$ eine Methylgruppe ist, oder

$R^6$ Wasserstoff oder $C_1$- bis $C_5$-Alkyl ist und

$R^7$ und $R^8$ zusammen mit den Kohlenstoffatomen, an die sie gebunden sind, einen $C_5$- oder $C_6$-Cycloalkylring oder eine Gruppe der Formel

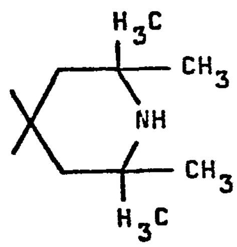

darstellen,

$R^2$ Wasserstoff, $C_1$- bis $C_{12}$-Alkyl oder eine Gruppe der Formel (II) bedeutet, wobei von den Resten $R^1$ und $R^2$ jedoch mindestens einer eine Gruppe der Formel (II) sein muß,

X eine Hydroxylgruppe oder eine Gruppe der Formel $—OR^9$ oder $—N(R^{10})_2$ ist, wobei

$R^9$ für eine $C_1$- bis $C_{18}$-Alkylgruppe und

$R^{10}$ für eine Methyl- oder Ethylgruppe steht,

$R^3$ eine Alkylengruppe mit 2 bis 4 C-Atomen in der Kette und

$R^4$ die Bedeutung einer Alkylengruppe mit 2 bis 18 Kohlenstoffatomen, einer Dimethylencyclohexan-, einer Phenylen- oder einer $C_7$- bis $C_{13}$-Aralkylengruppe hat, während

Y für Halogen oder eine Gruppe der Formel

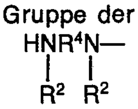 oder 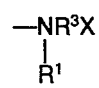 und

Z für Wasserstoff oder die Gruppe

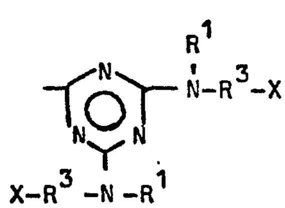

steht,
dadurch gekennzeichnet, daß man entweder A) eine Verbindung der Formel (III)

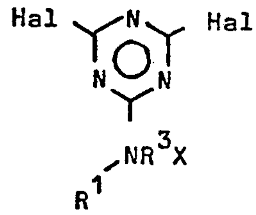

(III)

worin Hal = Halogen und $R^1$, $R^3$ sowie X die in Anspruch 1 angegebenen Bedeutungen haben, in einem inerten organischen Lösungsmittel bei einer Reaktionstemperatur von 50 bis 200 °C mit der 0,8 bis 2,0fach molaren Menge einer Verbindung der Formel (IV)

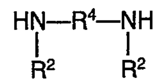

(IV)

in Gegenwart einer, bezogen auf Verbindung (IV), äquivalenten Menge einer Base umsetzt, oder B) zunächst die Verbindung (III) durch Umsetzen von Cyanurhalogenid mit der 0,8 bis 1,3fach molaren Menge einer Verbindung der Formel (V).

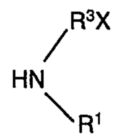

(V)

in einem inerten organischen Lösungsmittel unter Verwendung der, bezogen auf Verbindung (V), äquivalenten Menge Base als Katalysator sich bilden läßt und sodann die Verbindung (IV) zugibt, oder C) ein Cyanurhalogenid mit der 1,0 bis 1,2fach molaren Menge einer Verbindung der Formel (IV) zur Verbindung (VI)

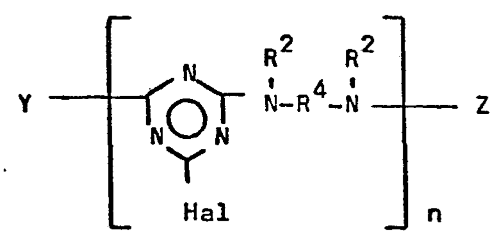

(VI)

umsetzt und deren Halogenatome mit der äquimolaren Menge einer Verbindung der Formel (V) abreagieren läßt.

2. Verwendung der nach dem Verfahren gemäß Ansprüch 1 hergestellten Verbindungen Stabilisieren von synthetischen Polymeren.

3. Verwendung nach Anpruch 2, dadurch gekennzeichnet, daß das Polymere ein Polyolefin ist.

4. Verwendung nach Anspruch 2, dadurch gekennzeichnet, daß das Polymere ein halogenhaltiges Polymeres ist.

5. Verwendung nach Anspruch 2, dadurch gekennzeichnet, daß das Polymere ein Polyacrylat oder Polymethacrylat ist.

6. Verwendung nach Anspruch 2, dadurch gekennzeichnet, daß das Polymere ein Homo- oder Copolymerisat des Styrols ist.

7. Verfahren zum Stabilisieren von synthetischen Polymeren gegen den schädigenden Einfluß von Licht, dadurch gekennzeichnet, daß man dem Polymeren, erforderlichenfalls zusätdich zu allgemein, üblichen stabilisierend wirkenden Stoffen, 0,01 bis 5 Gewichtsteile, bezogen auf Polymeres, eines Stabilisators nach Anspruch 1 zusetzt.

**Claims** (for the contracting States : BE, CH, DE, FR, GB, IT, LI, LU, NL, SE)

1. Triazine compounds of the formula (I)

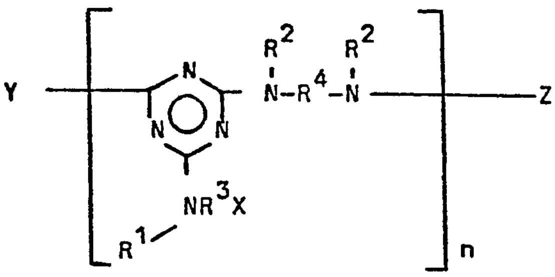

(I)

in which

n is a number of from 1 to 20,

$R^1$ means hydrogen or a group of the formula (II)

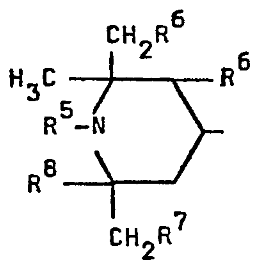

(II)

wherein

$R^5$ is hydrogen or $C_1$-$C_{18}$-alkyl,

$R^6$ and $R^7$ either are identical and represent hydrogen or a $C_1$-$C_5$-alkyl group,

in which case

$R^8$ is a methyl group ; or

$R^8$ is hydrogen or $C_1$-$C_5$-alkyl ; and

$R^7$ and $R^8$ together with the carbon atoms, to which they are bound, form a $C_5$- or $C_6$-cycloalkyl ring or a group of the formula

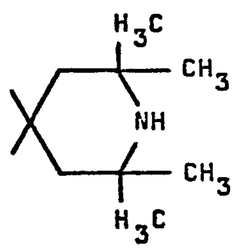

$R^2$ is hydrogen, $C_1$-$C_{12}$-alkyl or a group of the formula (II), with the proviso that at least one of the radicals $R^1$ and $R^2$ must be a group of the formula (II) ;

X means a hydroxyl group or a group of the formulae —$OR^9$ or —$N(R^{10})_2$ ;

$R^9$ standing for a $C_1$-$C_{18}$-alkyl group, and

$R^{10}$ for a methyl or ethyl group ;

$R^3$ is an alkylene group with from 2 to 4 carbon atoms in the chain, and

$R^4$ means an alkylene group with from 2 to 18 carbon atoms, a dimethylene cyclohexane, a phenylene or a $C_7$-$C_{13}$-aralkylene group ;

Y is halogen or a group of the formulae

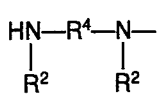 or 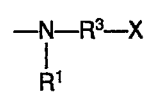 , and

stands preferably for hydrogen or the group

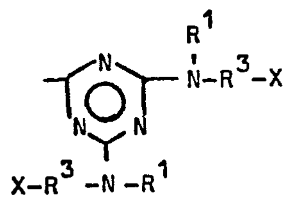

2. Process for the manufacture of the compounds according to Claim 1, which comprises reacting either A) a compound of the formula (III)

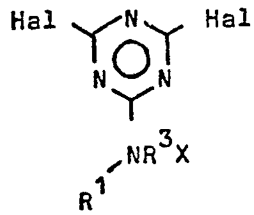

(III)

wherein Hal is Halogen and $R^1$, $R^3$ and X have the meanings indicated in Claim 1, in an inert organic solvent at a reaction temperature of from 50 to 200 °C with a 0.8- to 2.0-fold molar amount of a compound of the formula (IV)

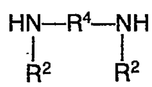

(IV)

in the presence of an equivalent amount relative to compound (IV) of a base ; or B) at first allowing compound (III) to form by reacting cyanuric halide with the 0.8- to 1.3-fold molar amount of a compound of formula (V)

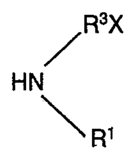

(V)

in an inert organic solvent, using an equivalent amount of base, relative to compound (V), as catalyst and then adding the compound (IV) ; or C) reacting a cyanuric halide with the 1.0- to 1.2-fold molar amount of a compound of formula (IV) to form compound (VI)

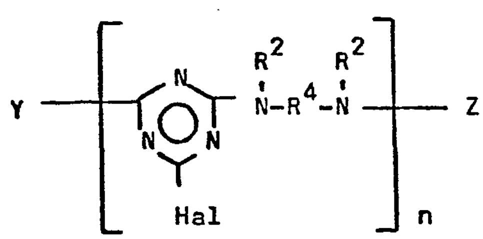

(VI)

and reacting the halogen atoms of this with the equimolar amount of a compound of formula (V).

3. Use of the compounds according to Claim 1 for Stabilizing synthetic polymers.

4. Use according to Claim 3, wherein the polymer is a polyolefin.

5. Use according to Claim 3, wherein the polymer contains halogen.

6. Use according to Claim 3, wherein the polymer is a polyacrylate or polymethacrylate.

7. Use according to Claim 3, wherein the polymer is a homopolymer or copolymer of styrene.

8. Process for stabilizing synthetic polymers against the damaging influence of light, wherein, optionally in addition to usual stabilizing agents there are added to the polymers from 0.01 to 5 parts by weight, relative to the polymer, of a stabilizer according to Claim 1.

9. Synthetic polymers stabilized against decomposition by UV, which contain from 0.01 to 5 parts by weight, relative to the polymer, of a stabilizer according to Claim 1.

**Claims** (for the contracting State AT)

1. A process for preparing triazine compounds of the formula (I)

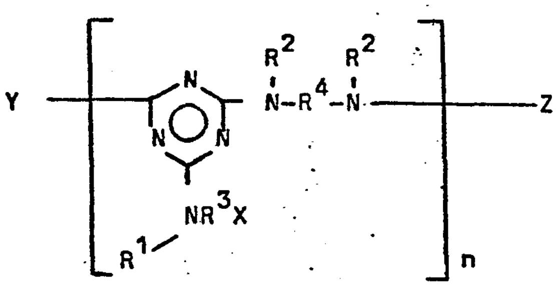

(I)

in which

n is a number of from 1 to 20,

$R^1$ means hydrogen or a group of the formula (II)

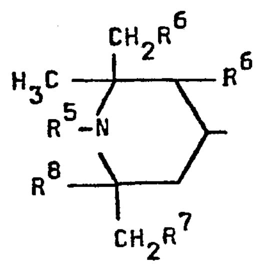

(II)

wherein

$R^5$ is hydrogen or $C_1$-$C_{18}$-alkyl,

$R^6$ and $R^7$ either are identical and represent hydrogen or a $C_1$-$C_5$-alkyl group, in which case

$R^8$ is a methyl group ; or

$R^6$ is hydrogen or $C_1$-$C_5$-alkyl ; and

$R^7$ and $R^8$ together with the carbon atoms, to which they are bound, form a $C_5$- or $C_6$-cycloalkyl ring or a group of the formula

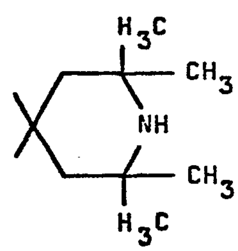

$R^2$ is hydrogen, $C_1$-$C_{12}$-alkyl or a group of the formula (II), with the proviso that at least one of the radicals $R^1$ and $R^2$ must be a group of the formula (II) ;

X means a hydroxyl group or a group of the formulae —$OR^9$ or —$N(R^{10})_2$ ;

$R^9$ standing for a $C_1$-$C_{18}$-alkyl group and

$R^{10}$ for a methyl or ethyl group ;

$R^3$ is an alkylene group with from 2 to 4 carbon atoms in the chain, and

$R^4$ means an alkylene group with from 2 to 18 carbon atoms, a dimethylene cyclohexane, a phenylene or a $C_7$-$C_{13}$-aralkylene group ;

Y is halogen or a group of the formulae

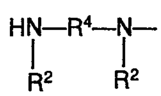 or 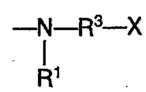 , and

stands for hydrogen or the group

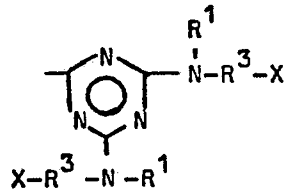

which comprises reacting either A) a compound of the formula (III)

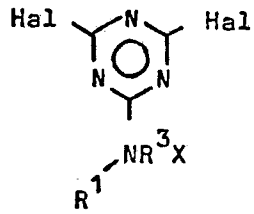

(III)

wherein Hal is halogen and $R^1$, $R^3$ and X have the meanings as indicated above, in an inert organic solvent at a reaction temperature of from 50 to 200 °C with a 0.8- to 2.0-fold molar amount of a compound of the formula (IV)

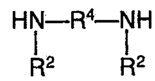

(IV)

in the presence of an equivalent amount relative to compound (IV) of a base ; or B) at first allowing compound (III) to form by reacting cyanuric halide with the 0.8- to 1.3-fold molar amount of a compound of formula (V)

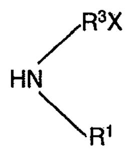

(V)

in an inert organic solvent, using an equivalent amount of base ; relative to compound (V), as catalyst and then adding the compound (IV) ; or C) reacting a cyanuric halide with the 1.0- to 1.2-fold molar amount of a compound of formula (IV) to form compound (VI)

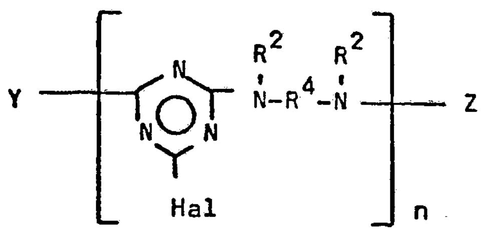

(VI)

and reacting the halogen atoms of this with the equimolar amount of a compound of formula (V).

2. Use of the compounds according to Claim 1 for stabilizing synthetic polymers.
3. Use according to Claim 2, wherein the polymer is a polyolefin.
4. Use according to Claim 2, wherein the polymer contains halogen.
5. Use according to Claim 2, wherein the polymer is a polyacrylate or polymethacrylate.
6. Use according to Claim 2, wherein the polymer is a homopolymer or copolymer of styrene.
7. Process for stabilizing synthetic polymers against the damaging influence of light, wherein, optionally in addition to usual stabilizing agents there are added to the polymers from 0.01 to 5 parts by weight, relative to the polymer, of a stabilizer according to Claim 1.

**Revendications** (pour les Etats contractants : BE, CH, DE, FR, GB, IT, LI, LU, NL, SE)

1. Composés triaziniques répondant à la formule (I)

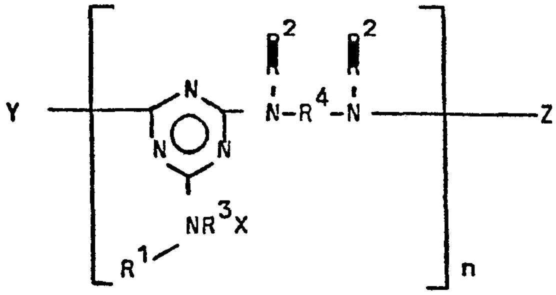

(I)

dans laquelle

n désigne un nombre de 1 à 20,

$R^1$ représente l'hydrogène ou un radical répondant à la formule (II)

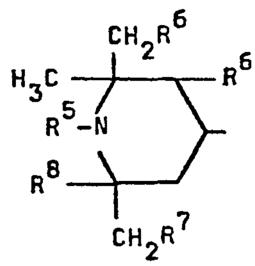

(II)

dans laquelle

$R^5$ représente l'hydrogène ou un radical alkyle en $C_1$-$C_{18}$,

$R^6$ et $R^7$ ou bien sont identiques et représentent chacun l'hydrogène ou un radical alkyle en $C_1$-$C_5$, auquel cas

$R^8$ représente un radical méthyle, ou bien

$R^6$ représente l'hydrogène ou un radical alkyle en $C_1$-$C_5$ et

$R^7$ et $R^8$ forment ensemble et avec les atomes de carbone auxquels ils sont liés un noyau cycloalkyle en $C_5$ ou $C_6$ ou un radical de formule

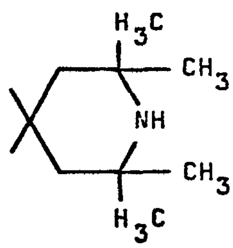

$R^2$ représente l'hydrogène, un radical alkyle en $C_1$-$C_{12}$ ou un radical de formule (II), avec la condition que l'un au moins des symboles $R^1$ et $R^2$ représente un radical de formule (II),

X représente un groupe hydroxy ou un groupe —$OR^9$ ou —$N(R^{10})_2$, où

$R^9$ désigne un radical alkyle en $C_1$ à $C_{18}$ et

$R^{10}$ un radical méthyle ou éthyle,

$R^3$ représente un radical alkylène contenant de 2 à 4 atomes de carbone dans la chaîne,

$R^4$ représente un radical alkylène contenant de 2 à 18 atomes de carbone, un radical diméthylène-cyclohexane, un radical phénylène ou un radical aralkylène en $C_7$-$C_{13}$,

Y représente un halogène ou un groupe de formule

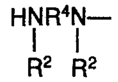 ou 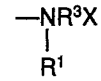 et

Z représente l'hydrogène ou un radical

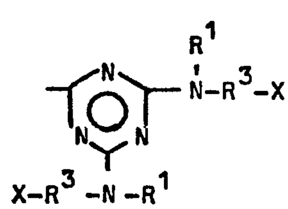

2. Procédé de préparation de composés selon la revendication 1, procédé caractérisé en ce que ou bien A) on fait réagir un composé répondant à la formule (III)

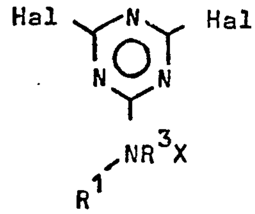

(III)

dans laquelle Hal représente un halogène et $R^1$, $R^3$ et X ont les significations données à la revendication 1, dans un solvant organique inerte, à une température réactionnelle de 50 à 200 °C, avec de 0,8 à 2,0 fois la quantité molaire d'un composé de formule IV

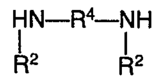

(IV)

en présence d'une quantité d'une base équivalente par rapport au composé (IV), ou bien B) on provoque d'abord la formation du composé (III) par réaction d'un halogénure de cyanuryle avec de 0,8 à 1,3 fois la quantité molaire d'un composé de formule (V)

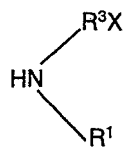

(V)

dans un solvant organique inerte, en utilisant comme catalyseur une quantité de base équivalente à celle du composé de formule (V), puis on ajoute le composé de formule (IV), ou bien C) on fait réagir un halogénure de cyanuryle avec de 1,0 à 1,2 fois la quantité molaire d'un composé de formule (IV) de manière à obtenir le composé de formule (VI)

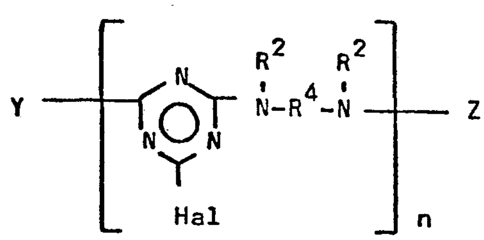

(VI)

et on achève de faire réagir ses atomes d'halogènes avec la quantité équimolaire d'un composé de formule (V).

3. Application des composés selon la revendication 1 à la stabilisation de polymères synthétiques.

4. Application selon la revendication 3, caractérisée en ce que le polymère est une polyoléfine.

5. Application selon la revendication 3, caractérisée en ce que le polymère est un polymère halogéné.

6. Application selon la revendication 3, caractérisée en ce que le polymère est un polyacrylate ou un polyméthacrylate.

7. Application selon la revendication 3, caractérisée en ce que le polymère est un homopolymère ou un copolymère du styrène.

8. Procédé pour stabiliser des polymères synthétiques contre les effets destructeurs de la lumière, procédé caractérisé en ce qu'on ajoute au polymère, au besoin en plus de composés à action stabilisante d'emploi courant de 0,01 à 5 parties en poids, par rapport au polymère d'un stabilisant selon la revendication 1.

9. Polymères synthétiques stabilisés contre la décomposition par les ultraviolets, polymères caractérisés en ce qu'ils contiennent de 0,01 à 5 parties en poids, par rapport aux polymères, d'un stabilisant selon la revendication 1.

**Revendications** (pour l'Etat contractant AT)

1. Procédé de préparation de composés triaziniques répondant à la formule (I)

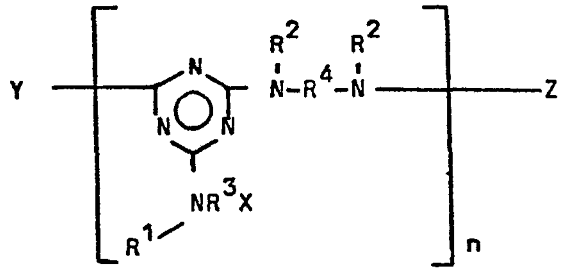

(I)

dans laquelle

n désigne un nombre de 1 à 20,

$R^1$ représente l'hydrogène ou un radical répondant à la formule (II)

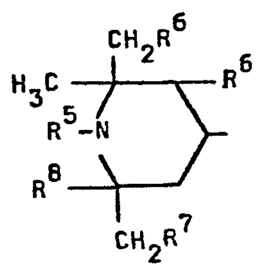

(II)

dans laquelle

$R^5$ représente l'hydrogène ou un radical alkyle en $C_1$-$C_{18}$,

$R^6$ et $R^7$ ou bien sont identiques et représentent chacun l'hydrogène ou un radical alkyle en $C_1$-$C_5$, auquel cas

$R^8$ représente un radical méthyle, ou bien

$R^6$ représente l'hydrogène ou un radical alkyle en $C_1$-$C_5$ et

$R^7$ et $R^8$ forment ensemble et avec les atomes de carbone auxquels ils sont liés un noyau cycloalkyle en $C_5$ ou $C_6$ ou un radical de formule

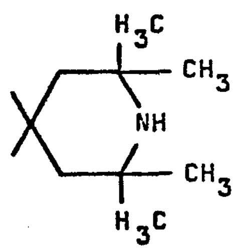

$R^2$ représente l'hydrogène, un radical alkyle en $C_1$-$C_{12}$ ou un radical de formule (II), avec la condition que l'un au moins des symboles $R^1$ et $R^2$ représente un radical de formule (II)

X représente un groupe hydroxy ou un groupe —$OR^9$ ou —$N(R^{10})_2$, où

$R^9$ désigne un radical alkyle en $C_1$ à $C_{18}$ et

$R^{10}$ un radical méthyle ou éthyle,

$R^3$ représente un radical alkylène contenant de 2 à 4 atomes de carbone dans la chaîne,

$R^4$ représente un radical alkylène contenant de 2 à 18 atomes de carbone, un radical de diméthylène-cyclohexane, un radical phénylène ou un radical aralkylène en $C_7$-$C_{13}$,

Y représente un halogène ou un groupe de formule

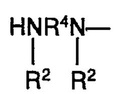 ou 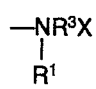 et

Z représente l'hydrogène ou un radical

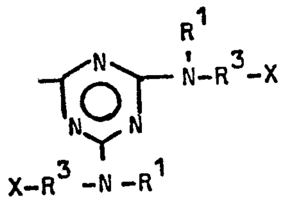

procédé caractérisé en ce que : ou bien A) on fait réagir un composé répondant à la formule (III)

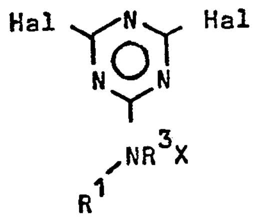

(III)

dans laquelle Hal représente un halogène et $R^1$, $R^3$ et X ont les significations données à la revendication 1, dans un solvant organique inerte, à une température réactionnelle de 50 à 200 °C, avec de 0,8 à 2,0 fois la quantité molaire d'un composé de formule (IV)

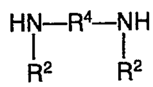

(IV)

en présence d'une quantité d'une base équivalente par rapport au composé (IV), ou bien B) on provoque d'abord la formation du composé (III) par réaction d'un halogénure de cyanuryle avec de 0,8 à 1,3 fois la quantité molaire d'un composé de formule (V)

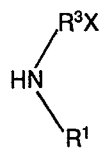

(V)

dans un solvant organique inerte, en utilisant comme catalyseur une quantité de base équivalente à celle du composé de formule (V), puis on ajoute le composé de formule (IV), ou bien C) on fait réagir un halogénure de cyanuryle avec de 1,0 à 1,2 fois la quantité molaire d'un composé de formule (IV) de manière à obtenir le composé de formule (VI)

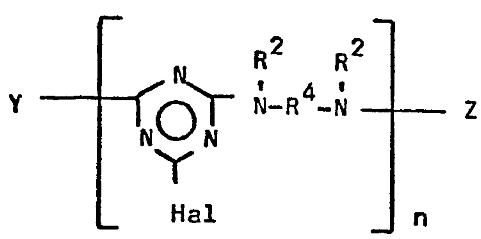

(VI)

et on achève de faire réagir ses atomes d'halogènes avec la quantité équimolaire d'un composé de formule (V).

2. Application des composés préparés par le procédé de la revendication 1 à la stabilisation de polymères synthétiques.

3. Application selon la revendication 2, caractérisée en ce que le polymère est une polyoléfine.

4. Application selon la revendication 2, caractérisée en ce que le polymère est un polymère halogéné.

5. Application selon la revendication 2, caractérisée en ce que le polymère est un polyacrylate ou un polyméthacrylate.

6. Application selon la revendication 2, caractérisée en ce que le polymère est un homopolymère ou un copolymère du styrène.

7. Procédé de stabilisation de polymères synthétiques contre les effets destructeurs de la lumière, éventuellement en ce qu'on ajoute au polymère, éventuellement en plus de composés à action stabilisante d'emploi courant, de 0,01 à 5 parties en poids, par rapport au polymère, d'un stabilisant selon la revendication 1.